Europäisches Patentamt

European Patent Office

Office européen des brevets

(19)

(11) Veröffentlichungsnummer: **0 218 919**

**B1**

(12) **EUROPÄISCHE PATENTSCHRIFT**

(45) Veröffentlichungstag der Patentschrift: **14.03.90**

(21) Anmeldenummer: **86112538.3**

(22) Anmeldetag: **10.09.86**

(51) Int. Cl.⁵: **B 29 C 45/73,** B 29 C 45/78, G 05 B 15/00

(54) **Verfahren zur Werkzeugtemperierung für die Formwerkzeuge von Spritzgiessmaschinen.**

(30) Priorität: **16.09.85 AT 2691/85**

(43) Veröffentlichungstag der Anmeldung:
**22.04.87 Patentblatt 87/17**

(45) Bekanntmachung des Hinweises auf die
Patenterteilung:
**14.03.90 Patentblatt 90/11**

(84) Benannte Vertragsstaaten:
**BE DE FR GB IT NL SE**

(56) Entgegenhaltungen:

**Kunststoffberater, vol. 23, September 1978, W.
Allerdisse "Steuer- und Regelsysteme an
Spritzgiessmaschinen", Seiten 475 bis 478.
Der Plastverarbeiter, vol. 26, August 1975, G.
Menges: "Erzielen konstanter
Temperaturverhältnisse beim Spritzgiessen",
Seiten 429-434.**

**Die Akte enthält technische Angaben, die nach
dem Eingang der Anmeldung eingereicht
wurden und die nicht in dieser Patentschrift
enthalten sind.**

(73) Patentinhaber: **Engel Maschinenbau
Gesellschaft m.b.H.
A-4311 Schwertberg (AT)**

(72) Erfinder: **Steinbichler, Georg
Bruckmühl 66
A-8786 Rottenmann (AT)**
Erfinder: **Smek, Erhard
Parkstrasse 32/2
A-4311 Schwertberg (AT)**
Erfinder: **Lampl, Alfred
Schacherbergstrasse 2
A-4311 Schwertberg (AT)**

(74) Vertreter: **Hofinger, Engelbert et al
Torggler-Hofinger Wilhelm-Greil-Strasse 16
A-6020 Innsbruck (AT)**

Courier Press, Leamington Spa, England.

## Beschreibung

Die Erfindung bezieht sich auf ein Verfahren zur Werkzeugtemperierung für die Formwerkzeuge von Spritzgießmaschinen, wobei in den Formwerkzeugen Leitungskreisläufe für ein Kühlmedium vorgesehen sind, sowie Leitungen für den Vorlauf und Rücklauf des Kühlmediums, mit Ventilen, mit welchen der Durchfluß des Kühlmediums steuerbar ist und mindestens einem Temperaturfühler am Formwerkzeug, der an einen Rechner, beispielsweise an einen Mikroprozessor angeschlossen ist.

Die derzeit bekannten Spritzgießmaschinen weisen Werkzeugkühl- bzw. Temperiersysteme auf, bei denen der Durchfluß des Kühlmediums, im allgemeinen Wasser, beispielsweise durch Verdrehen von Handrädern eingestellt werden kann. Anhand eines Schauglases bzw. -rohres kann der Spritzgießer die Menge des das Spritzgießwerkzeug in einer bestimmten Zeitspanne durchfließenden Mediums abschätzen. Selbstverständlich ist bei dieser Vorgangsweise die Erfassung der Kühlmediummenge nur ungenau. Ebenso ungenau wird bisher die eigentliche Werkzeugtemperatur ermittelt. So wird beispielsweise von der Beschaffenheit des Spritzgießproduktes auf die Werkzeugtemperatur rückgeschlossen oder es wird von außen die Werkzeugtemperatur ermittelt, z.B. indem ein Temperaturmeßgerät an die Werkzeughälften gebracht wird, oder durch einfaches Handauflegen.

Dieses bekannte System hat gravierende Nachteile. Nicht nur, daß es ungenau ist und daß die optimale Durchflußmenge des Kühlmediums nur schwer festzustellen und einzustellen ist. Weitere Nachteile sind, daß während des Betriebes der Spritzgießmaschine verschiedene Störgrößen auftreten, z.B. Druck- bzw. Temperaturänderungen des Kühlmediums, Änderungen der Umgebungstemperatur, Änderung der Temperierkanaldurchmesser, bzw. des Wärmeüberganges. Ebenso bringen selbstverständlich Produktionsunterbrechungen eine Änderung der Werkzeugtemperatur mit sich, auf die aber bei bekannten Spritzgießmaschinen nicht unmittelbar reagiert wird.

Aus dem Kunststoffberater, Vol. 23, September 1978, W. Auerdiss: "Steuer- und Regelsysteme an Spritzgießmaschinen", Seiten 475 bis 478 ist eine Vorrichtung zur Werkzeugtemperierung für die Formwerkzeuge von Spritzgießmaschinen bekannt, wobei in den Spritzgießwerkzeugen Leitungskreisläufe für ein Kühlmedium vorgesehen sind, sowie Leitungen für den Vorlauf und Rücklauf des Kühlmediums, mit Ventilen, die den Durchfluß des Kühlmediums steuern.

Aus der Druckschrift Der Plastverarbeiter, Vol. 26, August 1975, G. Menges: "Erzielen konstanter Temperaturverhältnisse beim Spritzgießen", Seiten 429 - 434 ist die Anwendung eines Rechners zur Steuerung der Werkzeugtemperaturen bekannt.

Aufgabe der Erfindung ist es, ein Verfahren zur Eichung und der Korrektur der Vorrichtung zur Werkzeugtemperierung von Spritzgießmaschinen zu schaffen.

Dies wird erfindungsgemäß dadurch erreicht, daß der Rechner das Schließen und Öffnen der Ventile als Funktion eines Temperaturunterschiedes in den Formwerkzeugen nach einer Meßperiode mit maximal geöffneten Ventilen und einer Meßperiode mit geschlossenen Ventilen steuert.

Vorteilhaft ist vorgesehen, daß eine Meßperiode einem Arbeitszyklus der Maschine entspricht.

Ein weiteres Ausführungsbeispiel der Erfindung sieht vor, daß der Temperaturunterschied zwischen den Temperaturen der Formwerkzeuge nach der Meßperiode mit geöffneten Ventilen und der Meßperiode mit geschlossenen Ventilen dann errechnet wird, wenn der Rechner vom Temperaturfühler im Formwerkzeug ein Signal erhält, daß die Temperatur im Formwerkzeug einer Solltemperatur entspricht.

Um eine absolut exakte Werkzeugtemperierung zu erzielen, ist in einem besonderen Ausführungsbeispiel der Erfindung vorgesehen, daß der Rechner den Temperaturunterschied nach einer Meßperiode mit geöffneten Ventilen und einer Meßperiode mit geschlossenen Ventilen aufs neue errechnet und das anschließende Schließen und Öffnen der Ventile diesem Temperaturunterschied anpaßt, wenn die Temperatur der Formwerkzeuge ein vorgegebenes Toleranzband unter- oder überschreitet.

An die Leitung für den Vorlauf des Kühlmediums kann weiters ein Durchlauferhitzer oder ein Kühlaggregat angeschlossen sein.

Der Durchlauferhitzer kommt dann zum Einsatz, wenn sehr kleine Massen (relativ zum Werkzeug) an Kunststoff verarbeitet werden. Das Kühlen des Wassers, das als Kühlmedium dient, wird hauptsächlich bei hohen Umgebungstemperaturen erfolgen.

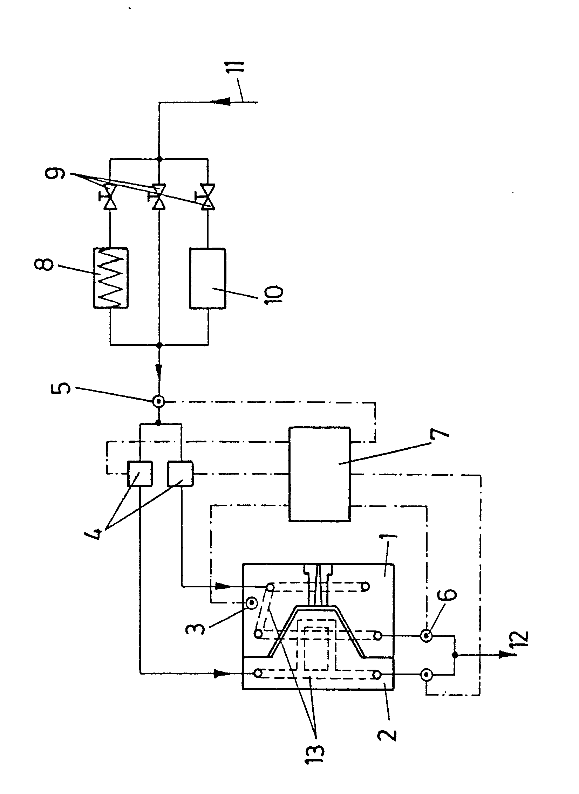

Nachfolgend wird ein Ausführungsbeispiel der Erfindung anhand der Figur der beiliegenden Zeichnung eingehend beschrieben.

Die Figur der Zeichnung zeigt das Schema des Kühlkreislaufes und der Steuerung.

Die nicht unmittelbar zur Erfindung gehörenden Teile der Spritzgießmaschine sind in der Zeichnung nicht berücksichtigt, sie sind nach dem herkömmlichen Stand der Technik auszuführen.

In der Figur der Zeichnung ist mit 1 die düsenseitige Werkzeughälfte und mit 2 die schließseitige Werkzeughälfte eines Formwerkzeuges einer Spritzgießmaschine gezeichnet. In den Werkzeughälften 1, 2 befinden sich Leitungskreisläufe 13 für das Kühlmedium, das in fast allen Fällen Wasser sein wird.

Der Durchfluß des Kühlmediums wird über Ventile 4, die als Magnetventile ausgeführt sind, gesteuert.

Im gezeigten Ausführungsbeispiel befindet sich in der Werkzeughälfte 1 ein Temperaturfühler 3 für das Erfassen der Werkzeugtemperatur. Dieser Temperaturfühler 3 ist an einen Rechner 7 angeschlossen.

Ebenso an den Rechner 7 angeschlossen sind ein Temperaturfühler 5 für die Verlauftemperatur des Kühlmediums und ein Temperaturfühler 6 für die Rücklauftemperatur des Kühlmediums.

An die Wasserzulaufleitung 11 sind vor dem Temperaturfühler für die Vorlauftemperatur ein Durchlauferhitzer 8 und ein Kühlgerät 10 angeschlossen. Durch Öffnen eines der Schieber 9 und Schließen der beiden anderen Schieber 9 kann bestimmt werden, ob der Spritzgießmaschine normales, gekühltes oder erwärmtes Leitungswasser zugeführt wird.

Die Wasser-rücklaufleitung ist mit 12 bezeichnet.

Der Bediener kann am Bildschirm der Mikroprozessorsteuerung die gewünschte Werkzeugtemperatur einstellen. Der Temperaturfühler 3 in der Werkzeughälfte 1 mißt zu einer definierten Zeit im Zyklus die Werkzeugtemperatur.

Nach Erreichen der vorgegebenen Temperatur bzw. des vorgegebenen Temperaturbereiches wird während zweier Eichzyklen das Streckverhalten des Werkzeuges durch den gemessenen Temperaturabfall bzw. Temperaturanstieg getestet.

Dazu führt die Vorrichtung zwei Eichzyklen durch. Im ersten Eichzyklus bleiben die Ventile 4 während der vollen Zykluszeit geöffnet. Im zweiten Eichzyklus bleiben die Ventile 4 über die volle Zykluszeit geschlossen. Nachdem der Rechner 7 die beiden Temperaturdifferenzen festgestellt hat, errechnet er die vorzugebende Öffnungszeit für die Ventile 4, mit der die vorgewählte Werkzeugtemperatur eingehalten wird.

Bei Überschreitung eines vorgegebenen Toleranzbandes für die Werkzeugtemperatur infolge Änderung der Vorlauftemperatur oder Druckverhältnisse wird die Eichung wiederholt.

Es besteht die Möglichkeit für jeden Kühl- bzw. Temperierkreislauf in den beiden Werkzeughälften, 1, 2 einen Temperaturfühler 3 vorzusehen. Bei kleinen Werkzeugen ist dies nicht immer möglich, deshalb korrigiert der Rechner 7 nach gemessener und vorgegebener Temperaturdifferenz zwischen Vor- und Rücklauf (Temperaturfühler 5 und Temperaturfühler 6) in den einzelnen Leitungen die ermittelte Basisöffnungszeit der Ventile 4. Die gewünschte Temperaturdifferenz zwischen Vor- und Rücklauf kann nach wirtschaftlichen und technischen Gesichtspunkten vom Einsteller vorgewählt werden. Damit kann ausgehend von der gewonnenen Information über einen einzigen Temperaturfühler 3 in der Werkzeughälfte 1 auch eine Überhitzung der schließseitigen Werkzeughälfte 2 vermieden werden.

## Patentansprüche

1. Verfahren zur Werkzeugtemperierung für die Formwerkzeuge von Spritzgießmaschinen, wobei in den Formwerkzeugen Leitungskreisläufe für ein Kühlmedium vorgesehen sind, sowie Leitungen für den Vorlauf und Rücklauf des Kühlmediums, mit Ventilen, mit welchen der Durchfluß des Kühlmediums steuerbar ist und mindestens einem Temperaturfühler am Formwerkzeug, der an einen Rechner, beispielsweise an einen Mikroprozessor angeschlossen ist, dadurch gekennzeichnet, daß der Rechner (7) das Schließen und Öffnen der Ventile (4) als Funktion eines Temperaturunterschiedes in den Formwerkzeugen (1, 2) nach einer Meßperiode mit maximal geöffneten Ventilen (4) und einer Meßperiode mit geschlossenen Ventilen (4) steuert.

2. Verfahren nach Anspruch 1, dadurch gekennzeichnet, daß eine Meßperiode einem Arbeitszyklus der Maschine entspricht.

3. Verfahren nach Anspruch 1, dadurch gekennzeichnet, daß der Temperaturunterschied zwischen den Temperaturen der Formwerkzeuge (1, 2) nach der Meßperiode mit geöffneten Ventilen (4) und der Meßperiode mit geschlossenen Ventilen dann errechnet wird, wenn der Rechner vom Temperaturfühler (3) im Formwerkzeug (1) ein Signal erhält, daß die Temperatur im Formwerkzeug (1) einer Solltemperatur entspricht.

4. Verfahren nach mindestens einem der Ansprüche 1 - 3, dadurch gekennzeichnet, daß der Rechner (7) den Temperaturunterschied nach einer Meßperiode mit geöffneten Ventilen (4) und einer Meßperiode mit geschlossenen Ventilen aufs neue errechnet und das anschließende Schließen und Öffnen der Ventile (4) diesem Temperaturunterschied anpaßt, wenn die Temperatur der Formwerkzeuge (1, 2) ein vorgegebenes Toleranzband unter- oder überschreitet.

## Revendications

1. Procédé pour équilibrer la température d'outils de moulage de machines de moulage par injection, dans les outils de moulage, étant prévus des canalisations de passage d'un agent de refroidissement ainsi que des conduits pour l'entrée et la sortie de l'agent de refroidissement, avec des soupapes à l'aide desquelles peut être commandé le débit de l'agent de refroidissement, et au moins un capteur de température situé sur l'outil de moulage et qui est relié à un calculateur, par exemple à un microprocesseur, caractérisé en ce que le calculateur (7) commande la fermeture et l'ouverture des soupapes (4) en fonction d'une différence de température dans les outils de moulage (1, 2), après une période de mesure avec les soupapes (4) ouvertes au maximum et une période de mesure avec les soupapes (4) fermées.

2. Procédé selon la revendication 1, caractérisé en ce qu'une période de mesure correspond à un cycle de travail de la machine.

3. Procédé selon la revendication 1, caractérisé en ce que la différence entre les températures des outils de moulage (1, 2) après la période de mesure avec les soupapes (4) ouvertes et la période de mesure avec les soupapes fermées est calculée lorsque le calculateur reçoit du capteur de température (3) de l'outil de moulage (1) un signal indiquant que la température dans l'outil de moulage (1) correspond à une température de consigne.

4. Procédé selon au moins une des revendications 1 à 3, caractérisé en ce que le calculateur (7) calcule à nouveau la différence de température après une période de mesure avec les soupapes (4) ouvertes et une période de mesure avec les soupapes fermées et il adapte ensuite la fermeture et l'ouverture des soupapes (4) à cette différence de température lorsque la température des outils de moulage (1, 2) est en déçà ou au delà d'une plage de tolérance prédéterminée.

**Claims**

1. A tool temperature control method for the moulding tools of injection moulding machines wherein provided in the moulding tools are conduit circuits for a cooling agent, as well as conduits for the feed flow and the return flow of the cooling agent, with valves with which the through flow of the cooling agent can be controlled, and at least one temperature sensor on the moulding tool, which is connected to a computer, for example a microprocessor, characterised in that the computer (7) controls the closing and opening of the valves (4) as a function of a temperature difference in the moulding tools (1, 2) after a measuring period with valves (4) in the condition of maximum opening and a measuring period with valves (4) closed.

2. A method according to claim 1 characterised in that a measuring period corresponds to a working cycle of the machine.

3. A method according to claim 1 characterised in that the temperature difference between the temperatures of the moulding tools (1, 2) after the measuring period with the valves (4) open and the measuring period with the valves closed is calculated when the computer receives from the temperature sensor (3) in the moulding tool (1) a signal that the temperature in the moulding tool (1) corresponds to a reference temperature.

4. A method according to at least one of claims 1 to 3 characterised in that the computer (7) calculates the temperature difference afresh after a measuring period with valves (4) open and a measuring period with valves closed, and matches the subsequent closing and opening of the valves (4) to said temperature difference when the temperature of the moulding tools (1, 2) falls below or exceeds a predetermined tolerance band.